# EUROPEAN PATENT APPLICATION

(11) **EP 3 520 880 A1**
(43) Date of publication of application: **07.08.2019**
(21) Application number: 18155131.8
(22) Date of filing: 05.02.2018
(51) Int. Cl.: B01D 53/02, B01D 53/72, B01D 53/81, B01J 20/28, B01J 20/20

(54) **A MULTI PURPOSE COMPOSITE GAS FILTER**

(71) Applicant: Airlabs BV, 1082 MS Amsterdam (NL)
(72) Inventor: Johnson, Matthew, 22647 Lund (SE); Meusinger, Carl, 2200 COPENHAGEN (DK); Bonomaully, James Samlall, 1454 Copenhagen (DK); Christoffersen, Sertan Østergaard Saltan, 1651 Copenhagen V (DK); Russell, Hugo Savill, Bristol, BS6 7NT (GB); Knap, Hasse Christian, 3000 Helsingør (DK)
(74) Representative: Kjerrumgaard, Lars Bo

(57) **Abstract**

The present invention relates to a filter for removing multiple target molecules from a gas stream, comprising a three-dimensional porous support permeable to the gas stream and a first plurality of active particles for removing a first undesired molecule and a second plurality of active particles for removing a second undesired molecule, wherein the first plurality of active particles are different from the second plurality of active particle, and wherein the first and second plurality of active particles are immobilized in or by the solid support. The present invention is a composite filter for removing components from an airstream by trapping or conversion using a composite filter containing multiple distinct active regions with varying chemical properties with different chemical composition within the same filter.

## Description

### FIELD OF THE INVENTION

The present invention relates to a composite filter and use of said composite filter in an air conditioner or air cleaner. Moreover, the present invention concerns an air cleaning device comprising the composite filter. Furthermore, the present invention relates to a motorized vehicle comprising an air conditioning device, an air cleaning device or both an air cleaning and air conditioning device wherein any one of the devices comprises the composite filter. The present invention also relates to a method of removing pollution components from ambient air comprising transporting the ambient air through the composite filter. The present invention is a composite filter for removing components from an airstream by trapping or conversion using a composite filter containing multiple distinct active regions with varying chemical properties with different chemical composition within the same composite filter.

### BACKGROUND OF THE INVENTION

Air pollution is bad for health; according to the World Health Organization it is the largest environmental threat killing more people annually than traffic accidents, diabetes and AIDS combined. The World Bank reports that the combined effects of air pollution are a significant drain on major economies.

Air pollution comprises many gas and condensed phase species. Focusing on their impact on human health some of the main components of air pollution are particulate matter (PM), ozone (O₃), nitric oxide (NO), nitrogen dioxide (NO₂), volatile organic compounds (VOC) such as formaldehyde (CH₂O), and carbon monoxide (CO). A common example is that diesel engines, due to the nature of their operation, can be a significant source of fine particulate matter (diesel soot) and nitrogen monoxide and dioxide, NO and NO₂, together denoted 'NOx'. Air pollution varies significantly with location and time; its sources may be primary emissions or pollution that is formed within the atmosphere. There may be local sources on top of elevated background concentrations. Local sources may include diesel vehicles, livestock, people heating their homes with wood or coal burning stoves, dust storms, industry or agricultural burning and so on. In addition, there may be very local sources of air pollution, for example cigarette smoke. Air pollution is also found inside the car, for example when a car is left in the sun the temperature can become very elevated, leading to emission of many undesirable volatile compounds from the car's interior.

Air pollutants considerable threats to human health. As an example, an estimated 40,000 premature deaths per year are linked to exposure to poor quality air in the UK and the resulting cost to the UK's businesses, society, and health services, adds up to more than £20 billion per year.

A large proportion of these premature deaths can be attributed to nitrogen dioxide, which is produced primarily because of combustion processes, with vehicle exhaust emissions being the main source of NO₂ in urban settings. The adverse effects of NO₂ on human health are well documented, and include irritation of the airways, impaired lung function, aggravation of pre-existing asthma, and an increased susceptibility to respiratory infections. The annual mean limit set by the EU is 40 µg/m³ and the mean concentration limit for NO₂ as an hourly average is 200 µg/m³.

In addition there are many obnoxious odors such as emissions from industry and agriculture. Food production, plastics manufacturing, refineries, painting and gluing produce a wide range of volatile organic compounds (VOC) and PM. Livestock production can produce intense odors including ammonia and hydrogen sulfide. The impacts of these compounds on people can include irritation, headache, asthma and other health effects. Odor itself is commonly regulated.

People in open or semi open spaces, such as in street canyons, street canyons with shops, restaurants, cafes, clubs, transportation stations and terminals including those for trains, buses and airplanes, airport terminals, shopping malls, pedestrians in the street etc., are exposed to polluted air, from traffic, cooking, industry, and other sources.

Preventing human exposure to air pollution is complex. It could involve converting an entire transportation fleet to low emission vehicles, which may be impractical due to the time required and the cost. Preventing pollution at its source is a preferred solution, but many pollution sources (wildfires, dust, transportation, heating etc.) are difficult to control and until source control has been implemented universally for the many sources, there is a demand for air cleaning devices to protect people and businesses in specific locations. Air purifiers remove pollution such as O₃, VOC, NO₂ and PM_{2.5}. They mainly comprise a fan, one or more filters and a box for housing the fan and the filter. Many filtration methods are known such as mechanical filtration, adsorption, gas phase advanced oxidation and electrostatic filtration and different methods are suitable for different removal tasks.

Air filtration involves removing one or more components from a gas stream. This may be accomplished by adsorption or absorption, physisorption or chemisorption, a liquid scrubber, or in the case of aerosol particles, impaction and interception with a fiber or electrostatic filter. The active media may include a large surface area for physisorption (examples include activated charcoal, graphene, metal organic frameworks), catalysts, photocatalysts, photothermocatalysts, reactive substrates (biofiltration, chemical reagents), and homogenously mixed materials, for example activated charcoal impregnated with a chemical reagent. In many cases an airstream will undergo multiple stages of treatment for example a catalyst followed by a chemical 'police' filter, or an acidic scrubber followed by a basic scrubber. A valuable filter would be able to treat a large amount of air in a small volume without demanding a lot of energy, which means it should not resist the airflow. It is difficult to combine multiple filtration functions for different types of pollution within a small effective filter.

### SUMMARY OF THE INVENTION

Materials including adsorbents (e.g. activated charcoal, Metal Organic Framework (MOF) (e.g. Aluminium Fumarate, HKUST-1, FeBTC, ZIF-8 or Ni-MOF-74) and other graphene/carbon-based materials), catalysts (e.g. gold nanoclusters, metal oxides), and photocatalysis (e.g. titanium dioxide, mixed metal oxides, composite metal oxide/graphene) remove pollution that come in contact with them. The performance of such systems can be enhanced by doping the surface, however many combinations are not intercompatible. For example, every surface in contact with the atmosphere is covered with a layer of water ranging from a single molecule thickness at very low relative humidities to a layer that chemically resembles bulk water at high humidities. To interact with the surface pollution must penetrate this layer. The affinity of many pollutants for water changes dramatically with pH. Some pollutants are acidic gases (e.g hydrogen sulfide and nitric, sulfuric, nitrous, hydrochloric, formic, acetic acid) and a basic substrate will be better at harvesting pollution for interaction with the surface. Other pollutants are basic gases (e.g. ammonia, amines, proton acceptors/electron donors) and an acidic substrate will enhance performance of an adsorbent, catalyst or photocatalyst. In this example the problem is that one material cannot be both acidic and basic as acids and bases neutralise one another.

The present invention relates to a composite filter for reducing or removing, for instance, pollution, which has a composite macroscopic morphology in the sense that there are multiple chemical domains with different filtering abilities. One example would be using a mixture of activated charcoal beads with different chemical properties that are not compatible within the same bead. For example, acid and base impregnation, or by mixing some beads with an embedded catalyst with others that composite filter a different set of target pollutants or gas components. By mixing beads with different chemical domains to create a composite filter, instead of mixing the chemicals in an impregnation used on all beads, certain advantages are obtained. For example, the chemicals used may not be mutually compatible, or they may inhibit activity towards specific components. A composite filter containing a mixture of domains, for example in the form of different types of treated and/or untreated activated charcoal beads, can be optimized to target specific pollution mixtures. In addition, impregnation itself may inhibit adsorption and/or reduce the available surface area. Also, it may be advantageous to trap semi volatile pollution within the composite filter in one bead so that it can be re-emitted and trapped in a nearby reactive bead, leading to a composite filter that has a high capacity and can regenerate itself. A composite filter of the present invention may comprise a support structure, an adsorbent substrate such as activated charcoal and a chemically active material (reactive dopant and/or (photo)catalyst); the invention relates to a composite filter morphology with multiple chemical domains resulting in improved performance.

The present invention concerns a composite filter for removing multiple target molecules from a gas stream, comprising a three-dimensional porous support permeable to the gas stream and a first plurality of active particles for removing a first target molecule and a second plurality of active particles for removing a second target molecule, wherein the first plurality of active particles are different from the second plurality of active particle, and wherein the first and second plurality of active particles are immobilized in or by the solid support.

In an embodiment the gas is ambient air and the target molecules are pollutants comprised in the ambient air.

In another embodiment the first and/or second plurality of active particles are doped to provide chemical properties targeting a certain segment of pollution.

In this context doped or doping is intended to mean a thin layer of molecules physically attached or chemically bonded to the surface of the particles to make them active, which does not cover the whole surface area. Doping is the deliberate addition, by any means, of an additional minor substance. It could be a catalyst, a trace chemical reagent, etc. Doping could be achieved by impregnation or by coating.

In a further embodiment the pollutants are selected from at least one of volatile organic compounds, urban pollutants, naturally occurring compounds, emissions from traffic, indoor sources (e.g. degassing from painted walls, dashboards in cars, electronic devices), industrial sites (e.g. power plants, paint shops, sewage treatment plants, tunnels, air terminals, harbors, ferry terminals, petrochemical facilities, materials manufacture, biofuel storage and processing, food production, livestock facilities), construction sites, natural sources (fires, dust storms), or occupational air pollution loads that include hazardous and non-hazardous concentrations of pollution. Typically, the pollutants are selected from at least one of ozone, nitrogen oxides, sulphur oxides, formaldehyde, carbon monoxide, ammonia and hydrogen sulfide.

In a still further embodiment the porous support comprises a third plurality of active particles for removing a third target molecule, wherein the third plurality of active particles are different from the first and second plurality of active particle, and wherein the third plurality of active particles are immobilized in or by the solid support.

In a further embodiment the porous support body comprises a further plurality of active particles for removing a further target molecule, wherein the further plurality of active particles is different from the first, second and third plurality of active particles, and wherein the further plurality of active particles is immobilized in or by the solid support.

In a still further embodiment the first, second, optionally third and optionally further plurality of active particles are each independently selected from the group consisting of activated carbon particles, activated carbon particles pre-treated/impregnated with a metal, activated carbon particles pre-treated/impregnated with an enzyme, activated carbon particles pretreated/impregnated with a basic compound, activated carbon particles pre-treated/impregnated with an acidic compound, Metal Organic Framework (MOF) particle, such as Aluminium Fumarate, HKUST-1 (Copper benzene-1,3,5-tricarboxylate), FeBTC (Iron 1,3,5-benzenetricarboxylate), ZIF-8 (2-Methylimidazole zinc salt) or Ni-MOF-74, catalyst particle, such as doped gold nanoclusters 1 wt% on a Cerium (IV) oxide (CeO₂) particle, 1 wt% Pt/TiO₂ particle, 0.1 wt% Pt/Fe₂O₃ particle, 3 wt% Pt/MnOx-CeO₂ particle, photocatalytic particles; provided that the first, second, optionally third and optionally further plurality of active particles are selected from different active particles.

In a further embodiment the three-dimensional porous support is selected from the group consisting of (i) a foam support body having a reticulated pore structure (ii) a felt of chemical- or bio-polymer fibers, (iii) twisted fiber thread, (iv) a flexible knitted fabric, (v) a bundle of mesh, (vi) a pile of strings, (vii) a pleated paper substrate, (viii) an air permeable three-dimensional rigid framework (e.g. metal wires or monofilaments), (viii) a brush like filter and, (ix) a material designed to give minimum flow resistance and maximum accessibility of the reaction surface to the gas, such as air, stream.

In a still further embodiment the first, second, optionally third and optionally further plurality of active particles have a total surface area of from 100 to 7000 m²/g. Typically, the first, second, optionally third and optionally further plurality of active particles have a total surface area from 800 to 2000 m²/g, such as from 1000-1700 m²/g.

In a further embodiment the first, second, optionally third and optionally further plurality of active particles are fixed to the pore structure of the support by an adhesive forming an adhesive layer.

In a still further embodiment the activated carbon particle is selected from activated carbon spheres, activated carbon beads, and/or activated carbon granules.

In a further embodiment the first, second, optionally third and optionally further plurality of active particles having an average particle diameter in the range from 0.005 to 3.0 mm, such as 0.01 to 2.0 mm.

In a still further embodiment the first, second, optionally third and optionally further plurality of active particles are independently selected from activated carbon particles pretreated with lithium permanganate, calcium acetate, copper dioxide, potassium hydroxide, sodium hydroxide, calcium hydroxide or magnesium hydroxide, potassium permanganate, manganese dioxide, copper nitrate, manganese acetate, potassium carbonate, or sodium permanganate.

In a further embodiment the foam is a polyurethane based foam, such as a polyester and/or polyether based foam.

In a still further embodiment the adhesive layer has a thickness obtainable by coating the foam at least two times with the adhesive, such as from 2-10 times, typically, 4-6 times.

In a further embodiment the adhesive is selected from a hot-melt adhesive, such as an ethylene vinyl acetate based adhesive; or an adhesive based on polystyrene, urethane, liquid resin, polyurethane, and/or styrene.

In a still further embodiment the composite filter, when air or gas is transported through the composite filter to remove pollution from the air or gas, exhibits a low pressure drop and a specific space velocity, wherein the pressure drop is below 20 Pa and the space velocity is from 5.000 h⁻¹ to 180.000 h⁻¹.

In a further aspect the present invention relates to use of a composite filter of any one of the above aspects and/or embodiments in an air cleaning device.

In a still further aspect the present invention relates to use of a composite filter of any one of the above aspects and/or embodiments in an air conditioning device.

In a further aspect the present invention relates to an air cleaning device comprising the composite filter of any one of the above aspects and/or embodiments.

In a still further aspect the present invention relates to a motorized vehicle comprising an air conditioning device, an air cleaning device or both an air cleaning and air conditioning device wherein any one of the devices comprises a composite filter of any one of the above aspects and/or embodiments.

In a further aspect the present invention relates to a method of removing pollution molecules from ambient air comprising transporting the ambient air through a composite filter of any one of the above aspects and/or embodiments.

Further objects and advantages of the present invention will appear from the following description, and claims.

### DESCRIPTION OF THE INVENTION

Optimal pollution control for a broad range of pollution can be achieved using a composite filter comprised of materials having distinct chemical environments; these chemical zones are not necessarily compatible with one another. One instance would be a mixture of acid-treated activated charcoal beads with base-treated activated charcoal beads. The beads comprising the mix can be optimised to target specific pollutants or types of pollutants -- acidic gases or basic gases, or, perhaps a catalyst that targets a specific form of pollution (e.g. gold nanoclusters for formaldehyde). Acid or base treatment can reduce the capacity of the material, and so it may be optimal to have some untreated beads that add reservoir capacity to the composite filter. These beads will grab pollution and hold it in the region of the treatment beads that process pollution. Performance depth for a broad range of air pollution is gained by blending beads with different chemical environments.

The present invention concerns a composite filter for removing multiple target molecules from a gas stream, comprising a three-dimensional porous support permeable to the gas stream and a first plurality of active particles for removing a first target molecule and a second plurality of active particles for removing a second target molecule, wherein the first plurality of active particles are different from the second plurality of active particle, and wherein the first and second plurality of active particles are immobilized in or by the support.

When removing multiple target molecules from the gas, the term "multiple" means at least two different kinds of target molecules, such as, ozone, nitrogen oxides, sulphur oxides, formaldehyde, carbon monoxide, and hydrogen sulfide.

The term "a three-dimensional porous support permeable to the gas stream" as used herein means a support which is permeable to the gas stream and which support in itself is a three-dimensional structure or which support can be used to create a three-dimensional structure. Examples are a foam support body having a reticulated pore structure, a felt of polymer fibers, a twisted fiber thread, a flexible knitted fabric, a bundle of mesh, a pile of strings, a pleated paper substrate, an air permeable three-dimensional rigid framework (e.g. metal wires or monofilaments), a brush like composite filter and, a material designed to give minimum flow resistance and maximum accessibility of the reaction surface to the gas.

The term "target molecules" as used herein means one or more molecules, including a cluster of molecules, which have been decided to be remove from the gas stream, such as ambient air. Based on such decision the plurality of active particles are selected and incorporated in the composite filter of the present invention.

The term "a cluster of molecules" as used herein is an ensemble of between 5 to 105 atoms or molecules that are bound to each other through Van der waals interactions, valence electron sharing (covalent bond) or through an ionic bond. A cluster can consist of a mixture of different molecules; one cluster may be dominated by different organic molecules while others are dominated by acid or basic molecules.

When the first and second plurality of active particles (or even a third or further active particles) are immobilized in the solid support it means that such active particles are fixed to the support, such as glued to the support, and when the active particles are immobilized by the support it means that the active particles are hold in position by the structure of the support.

In an embodiment the gas is ambient air and the target molecules are pollutants comprised in the ambient air.

The term "ambient air" as used herein is without limitation urban air, indoor air, industrially emitted air, process exhaust air, air inside closed spaces (inside cars, busses, trucks, taxis, etc.), air in semi-enclosed spaces (bus stops, train stations, parking house, etc.), air emitted from traffic or ships, air emitted through construction site process, air emitted from biogenic or natural sources, air found within the Earth's atmosphere, air unable to escape the Earth's gravity.

In another embodiment the first plurality of active particles are doped to provide chemical properties targeting a certain segment of pollution.

In another embodiment the second plurality of active particles are doped to provide chemical properties targeting a certain segment of pollution.

In another embodiment the first and second plurality of active particles are doped to provide chemical properties targeting a certain segment of pollution.

In a further embodiment the pollutants are selected from at least one of volatile organic compounds, urban pollutants, naturally occurring compounds, emissions from traffic, indoor sources (e.g. degassing from painted walls, dashboards in cars, electronic devices), industrial sites (e.g. power plants, paint shops, sewage treatment plants, tunnels, air terminals, harbors, ferry terminals, petrochemical facilities, materials manufacture, biofuel storage and processing, food production, livestock facilities), construction sites, natural sources (fires, dust storms), occupational air pollution loads that include hazardous and non-hazardous concentrations of pollution. Typically, the pollutants are selected from at least one of ozone, nitrogen oxides, sulphur oxides, formaldehyde, carbon monoxide, ammonia and hydrogen sulfide.

In a still further embodiment the porous support comprises a third plurality of active particles for removing a third target molecule, wherein the third plurality of active particles are different from the first and second plurality of active particles, and wherein the third plurality of active particles are immobilized in or by the solid support.

In a further embodiment the porous support body comprises a further plurality of active particles for removing a further target molecule, wherein the further plurality of active particles is different from the first, second and third plurality of active particles, and wherein the further plurality of active particles is immobilized in or by the solid support.

In a still further embodiment the first, second, optionally third and optionally further plurality of active particles are each independently selected from the group consisting of activated carbon particles, activated carbon particles pre-treated/impregnated with a metal, activated carbon particles pre-treated/impregnated with an enzyme, activated carbon particles pretreated/impregnated with a basic compound, activated carbon particles pre-treated/impregnated with an acidic compound, metal organic framework (MOF) particle, such as Aluminium Fumarate, HKUST-1 (Copper benzene-1,3,5-tricarboxylate), FeBTC (Iron 1,3,5-benzenetricarboxylate), ZIF-8 (2-Methylimidazole zinc salt) or Ni-MOF-74, catalyst particle, such as doped gold nanoclusters 1 wt% on a Cerium (IV) oxide (CeO₂) particle, 1 wt% Pt/TiO₂ particle, 0.1 wt% Pt/Fe₂O₃ particle, 3 wt% Pt/MnOx-CeO₂ particle, photocatalytic particles; provided that the first, second, optionally third and optionally further plurality of active particles are selected from different active particles.

In a further embodiment the three-dimensional porous support has a pore size of less than 25 pores per inch (PPI). Typically, the pore size is from 5 to 20 PPI, such as from 8-12 PPI.

In a further embodiment the three-dimensional porous support is selected from the group consisting of (i) a foam support body having a reticulated pore structure (ii) a felt of polymer fibers, (iii) twisted fiber thread, (iv) a flexible knitted fabric, (v) a bundle of mesh, (vi) a pile of strings, (vii) a pleated paper substrate, (viii) an air permeable three-dimensional rigid framework (e.g. metal wires or monofilaments), (viii) a brush like composite filter and, (ix) a material designed to give minimum flow resistance and maximum accessibility of the reaction surface to the gas, such as air, stream.

In a still further embodiment the first plurality of active particles have a total surface area of from 500 to 3000 m²/g. In a further embodiment the second plurality of active particles have a total surface area of from 500 to 3000 m²/g. In a still further embodiment the third plurality of active particles have a total surface area of from 500 to 3000 m²/g. In a further embodiment the further plurality of active particles have a total surface area of from 500 to 3000 m²/g. When further pluralities of active particles are present in the porous support this could mean 4, 5, 6, 7, 8, 9, or 10 different plurality of active molecules. Typically, the first, second, optionally third and optionally further plurality of active particles have a total surface area from 800 to 2000 m²/g, such as from 1000-1700 m²/g.

The term "a plurality" as used herein means that at least 3 active particles are present in the porous support, and typically, when for instance making filters for use in cars, more than 100 active particles are present.

In a further embodiment the first plurality of active particles are fixed to the pore structure of the support by an adhesive forming an adhesive layer.

In a further embodiment the second plurality of active particles are fixed to the pore structure of the support by an adhesive forming an adhesive layer.

In a further embodiment the third plurality of active particles are fixed to the pore structure of the support by an adhesive forming an adhesive layer.

In a further embodiment the further plurality of active particles are fixed to the pore structure of the support by an adhesive forming an adhesive layer.

In a still further embodiment, the activated carbon particles are selected from activated carbon spheres, activated carbon beads, and/or activated carbon granules.

In a further embodiment the first plurality of active particles having an average particle diameter in the range from 0.005 to 3.0 mm. In a further embodiment the second plurality of active particles having an average particle diameter in the range from 0.005 to 3.0 mm. In a further embodiment the third plurality of active particles having an average particle diameter in the range from 0.005 to 3.0 mm. In a further embodiment the further plurality of active particles having an average particle diameter in the range from 0.005 to 3.0 mm. Typically, the average particle diameter is in the range from 0.01 to 2.0 mm.

In a still further embodiment the first plurality of active particles are selected from activated carbon particles pretreated with lithium permanganate, calcium acetate, copper dioxide, an alkali or alkaline earth hydroxide, potassium permanganate, manganese dioxide, copper nitrate, manganese acetate, potassium carbonate, or sodium permanganate.

In a still further embodiment the second plurality of active particles are selected from activated carbon particles pretreated with lithium permanganate, calcium acetate, copper dioxide, an alkali or alkaline earth hydroxide, potassium permanganate, manganese dioxide, copper nitrate, manganese acetate, potassium carbonate, or sodium permanganate.

In a still further embodiment the third plurality of active particles are selected from activated carbon particles pretreated with lithium permanganate, calcium acetate, copper dioxide, alkali or alkaline earth hydroxide, potassium permanganate, manganese dioxide, copper nitrate, manganese acetate, potassium carbonate, or sodium permanganate.

In a still further embodiment the further plurality of active particles are selected from activated carbon particles pretreated with lithium permanganate, calcium acetate, copper dioxide, alkali or alkaline earth hydroxide, potassium permanganate, manganese dioxide, copper nitrate, manganese acetate, potassium carbonate, or sodium permanganate.

In a further embodiment the three-dimensional porous support is selected from a foam support body having a reticulated pore structure. Preferably, the foam is a polyurethane based foam, such as a polyester and/or polyether based foam.

In a still further embodiment the adhesive layer has a thickness obtainable by coating the foam at least two times with the adhesive. Typically, by coating the foam from 2-10 times, such as 4-6 times, with the adhesive.

In a further embodiment the adhesive is selected from a hot-melt adhesive. In a further embodiment the adhesive is selected from an ethylene vinyl acetate based adhesive.

In a still further embodiment the adhesive is selected from an adhesive based on polystyrene, urethane, liquid resin, polyurethane, and/or styrene.

In a still further embodiment the composite filter, when air or gas is transported through the composite filter to remove pollution from the air or gas, exhibits a low pressure drop and a specific space velocity, wherein the pressure drop is below 20 Pa and the space velocity is from 5.000 h⁻¹ to 180.000 h⁻¹.

In a further aspect the present invention relates to use of a composite filter of any one of the above aspects and/or embodiments in an air cleaning device.

In a still further aspect the present invention relates to use of a composite filter of any one of the above aspects and/or embodiments in an air conditioning device.

In a further aspect the present invention relates to an air cleaning device comprising the composite filter of any one of the above aspects and/or embodiments.

In a still further aspect the present invention relates to a motorized vehicle comprising an air conditioning device, an air cleaning device or both an air cleaning and air conditioning device wherein any one of the devices comprises a composite filter of any one of the above aspects and/or embodiments.

In a further aspect the present invention relates to a method of removing pollution molecules from ambient air comprising transporting the ambient air through a composite filter of any one of the above aspects and/or embodiments.

Each and every embodiment as described in connection with the different aspects also applies to the further aspects described above, both individually and in combination.

The term "an air cleaning device" as used herein means a unit that is configured to draw air into the unit wherein the air is cleaned from pollution, such as by leading the air through a composite filter of the present invention removing the pollution or part of the pollution, and then is emitted out of the unit, for instance by means of a fan, wind power or similar means. Typical construction of such air cleaning devices is known to the skilled person. The air cleaning device is adapted to receive current from for instance a power cable.

As used herein the term "fine particulate matter" means particles smaller than 300 nm in mean mass aerodynamic diameter (MMAD). The term "nanoparticles" or "fine particles" is used interchangeably with fine particulate matter.

The invention will now be described more fully with reference to the appended drawings illustrating typical embodiments of the street furniture with air cleaning devices integrated therein.

These drawings are by no means limiting the scope of the present invention and are only intended to guide the skilled person for better understanding of the present invention.

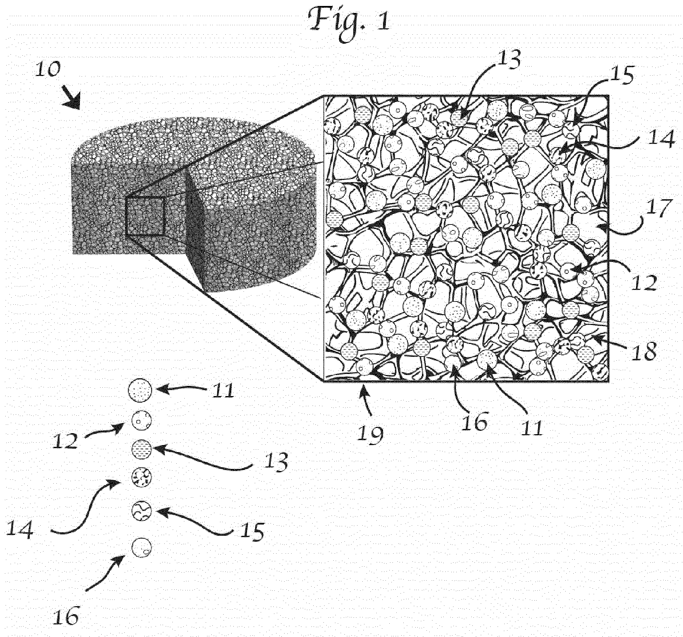

Figure 1 illustrates a foam support body (10) having a reticulated pore structure composite filter with different pluralities of active particles. A small section of the filter body (10) is magnified (19) and the different active particles are illustrated (11, 12, 13, 14, 15, 16). For instance, the first active particle (11) may be a catalytic bead or more specifically a gold nanoclusters on cerium(IV)oxide catalyst particle. The second active particle (12) maybe an activated carbon bead, more specifically an activated carbon particle impregnated with potassium permanganate. The third active particle (13) maybe a basic/alkaline activated carbon bead, more specifically an activated carbon particle impregnated with potassium hydroxide. The fourth active particle (14) maybe an acid activated carbon particle, more specifically an activated carbon particle impregnated with nitric acid. The fifth active particle (15) maybe an active MOF particle, more specific a HKUST-1 particle. The sixth active particle (16) maybe an activated carbon particle, more specifically an activated carbon particle without impregnation to keep the surface area as high as possible. The foam wall (18) constitutes the porous structure with empty space (17) between the foam walls. The active particles may be glued on the surface of the pores.

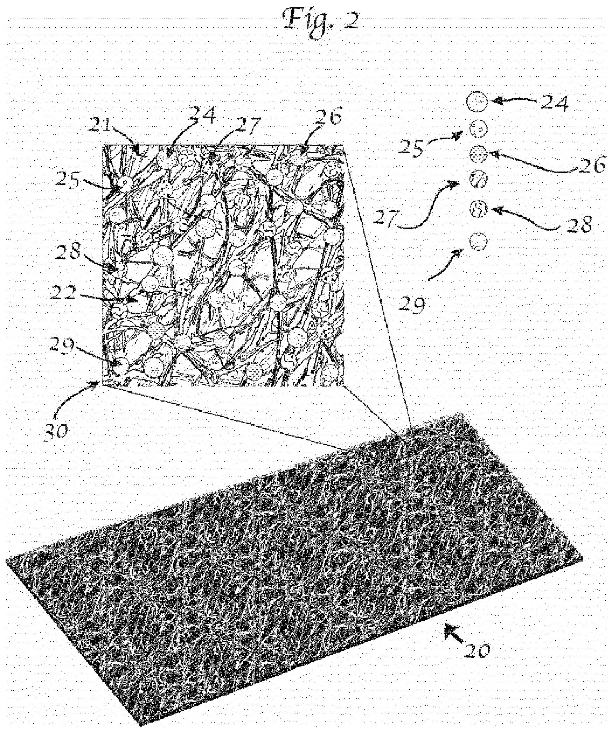

Figure 2 illustrates a felt of polymer fibers filter (20) with different active particles (24-29). A small section of the filter (20) is magnified (30) and the different active particles are illustrated (24-29). The different active particles may be selected from the same as in figure 1, so that active particle (11-16) corresponds to (24-29), respectively. The felt consists of fibers (21) and empty spaces (22). The active particles may be glued on the surface of the fibers.

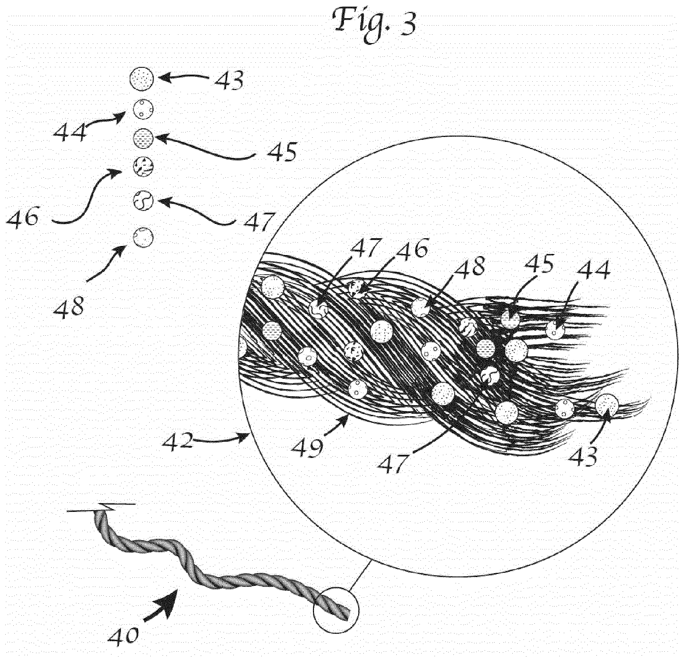

Figure 3 illustrates a spun yarn or twisted fiber thread filter (40) with different active particles (43-48). A small section of the filter (40) is magnified (42) and the different active particles are illustrated (43-48). The different active particles may be selected from the same as in figure 1, so that active particle (11-16) corresponds to (43-48), respectively. The thread (40) is composed of fibers (49) which are spun as shown. The active particles may be glued on the surface of the threads.

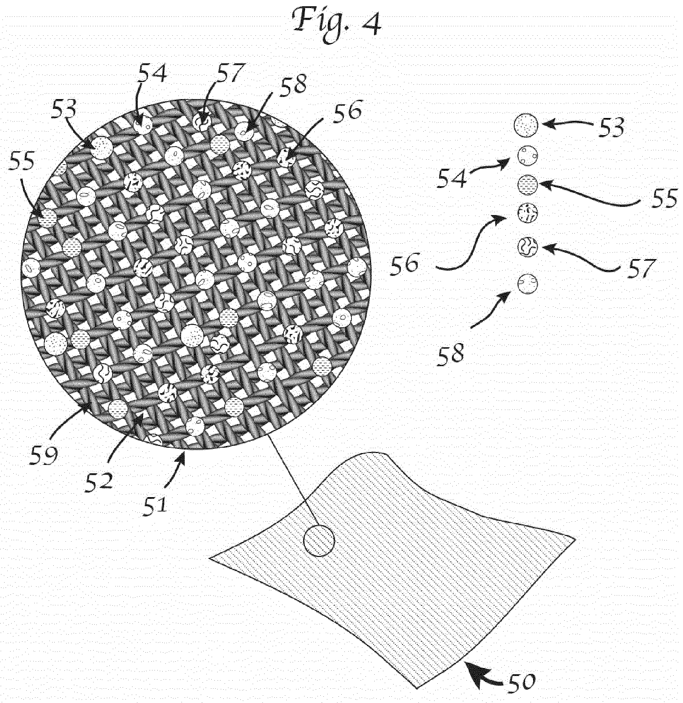

Figure 4 illustrates a flexible knitted fabric filter (50) with different active particles (53-58). A small section of the filter (50) is magnified (51) and the different active particles are illustrated (53-58). The different active particles may be selected from the same as in figure 1, so that active particle (11-16) corresponds to (53-58), respectively. The knitted fabric (50) consists of fibers (51) and empty spaces (52). The active particles may be glued on the surface of the fabric.

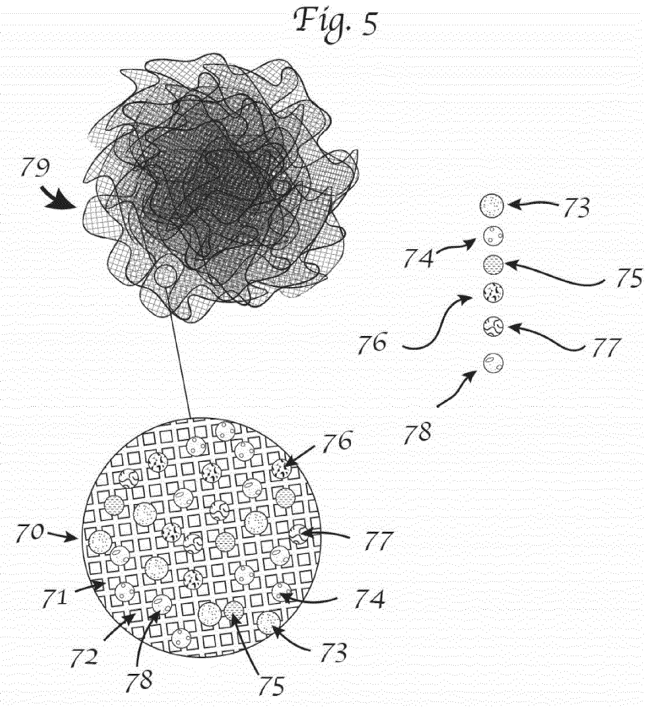

Figure 5 illustrates a Sponge or bundle of mesh filter (79) with different active particles (73-78). A small section of the filter (79) is magnified (70) and the different active particles are illustrated (73-78). The different active particles may be selected from the same as in figure 1, so that active particle (11-16) corresponds to (73-78), respectively. The mesh filter (79) consists of fibers (71) and empty spaces (72) in the mesh. The active particles may be glued on the surface of the fibers.

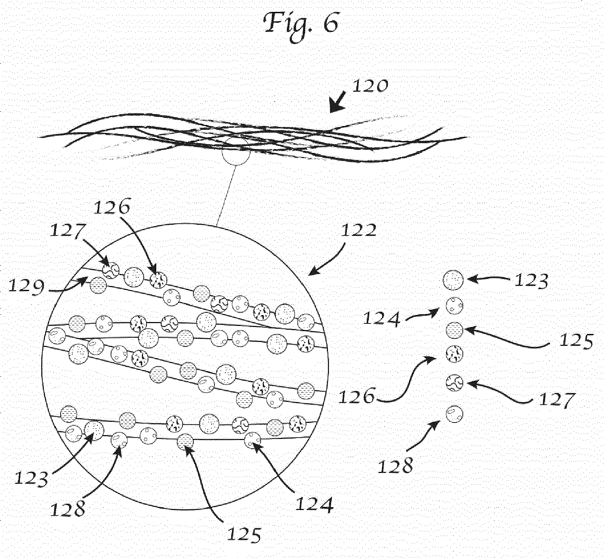

Figure 6 illustrates a pile of strings or a bundle made of one string filter (120) with different active particles (123-128). A small section of the filter (120) is a magnified view of the strings (122) and the different active particles are illustrated (123-128). The different active particles may be selected from the same as in figure 1, so that active particle (11-16) corresponds to (123-128), respectively. The string filter (120) consists of multiple strings (129) that are made into a bundle. The active particles may be glued on the surface of the strings.

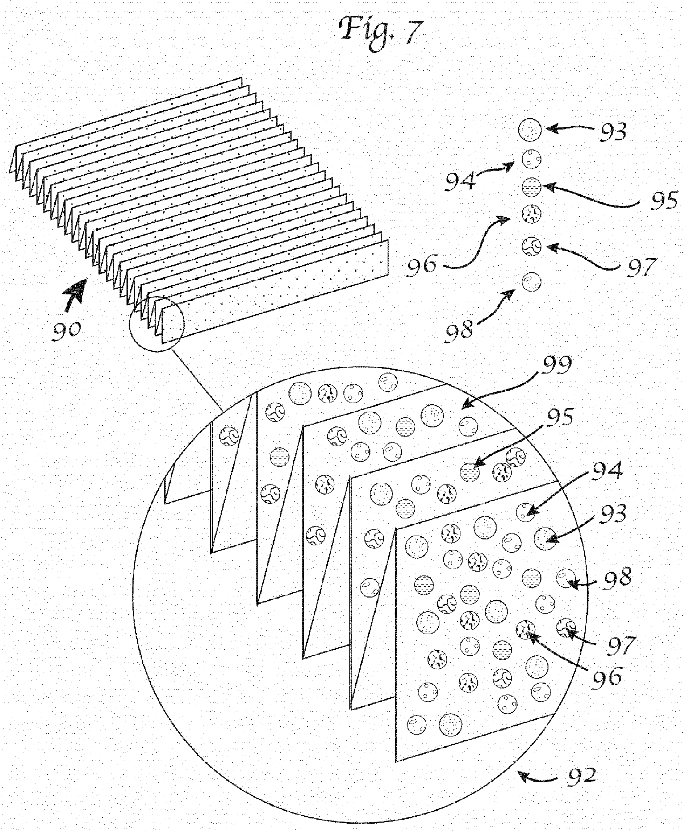

Figure 7 illustrates a pleated paper or non-woven substrate filter (90) with different active particles (93-98). A small section of the filter (90) is a magnified view of the strings (92) and the different active particles are illustrated (93-98). The different active particles may be selected from the same as in figure 1, so that active particle (11-16) corresponds to (93-98), respectively. The substrate filter (90) consists of a filter substrate (99) which have been pleated. The active particles may be glued on the surface of the pleated paper.

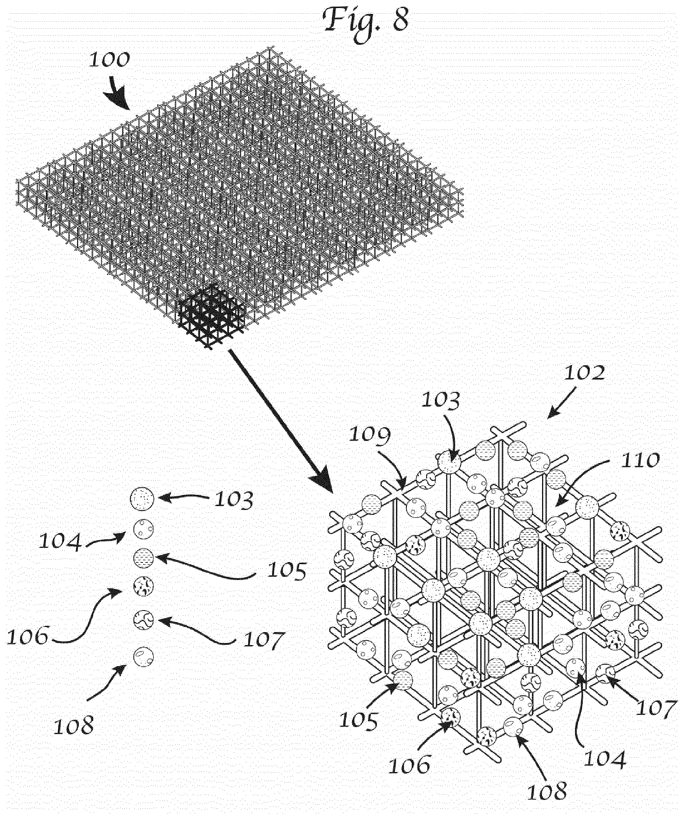

Figure 8 illustrates a three-dimensional rigid framework filter (100) with different active particles (103-108). A small section of the filter (100) is a magnified view of the three-dimensional rigid framework (102) and the different active particles are illustrated (103-108). The different active particles may be selected from the same as in figure 1, so that active particle (11-16) corresponds to (103-108), respectively. The framework filter (100) consists of a rigid frame (109). The active particles may be glued on the framework.

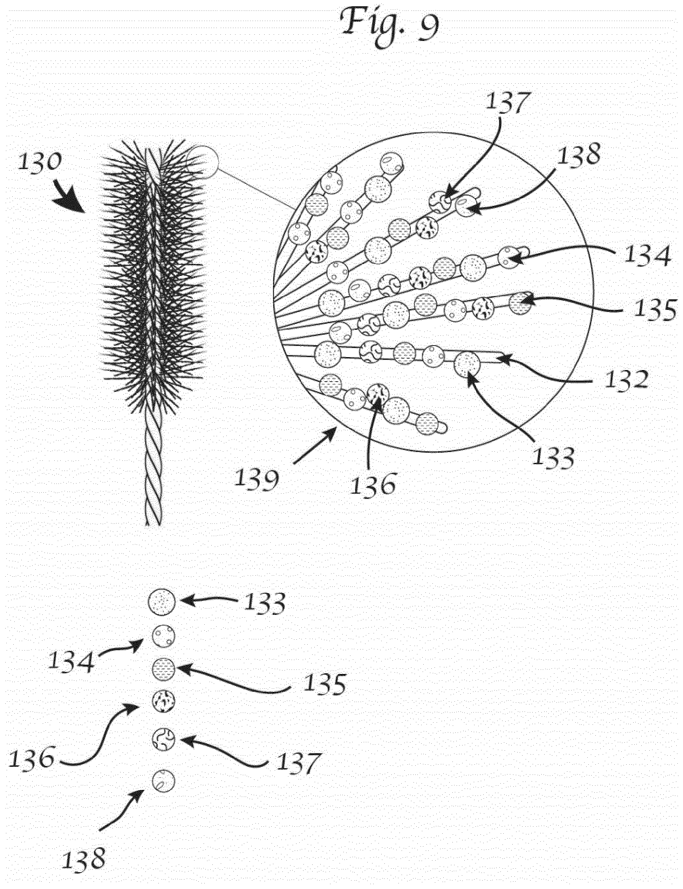

Figure 9 illustrates a feather or brush like filter (130) with active particles on the brush threads (132). A small section of the filter (130) is a magnified view of the brush threads (139) and the different active particles are illustrated (133-138). The different active particles may be selected from the same as in figure 1, so that active particle (11-16) corresponds to (133-138), respectively. The brush like filter (130) consists of multiple brush threads (132) to which the active particles may be glued.

All references, including publications, patent applications and patents, cited herein are hereby incorporated by reference to the same extent as if each reference was individually and specifically indicated to be incorporated by reference and was set forth in its entirety herein.

All headings and sub-headings are used herein for convenience only and should not be construed as limiting the invention in any way.

Any combination of the above-described elements in all possible variations thereof is encompassed by the invention unless otherwise indicated herein or otherwise clearly contradicted by context.

Recitation of ranges of values herein are merely intended to serve as a short method of referring individually to each separate value falling within the range, unless other-wise indicated herein, and each separate value is incorporated into the specification as if it were individually recited herein. Unless otherwise stated, all exact values provided herein are representative of corresponding approximate values (e.g., all exact exemplary values provided with respect to a particular factor or measurement can be considered to also provide a corresponding approximate measurement, modified by "about", where appropriate).

All methods described herein can be performed in any suitable order unless otherwise indicated herein or otherwise clearly contradicted by context.

The terms "a" and "an" and "the" and similar referents as used in the context of describing the invention are to be construed to insert both the singular and the plural, unless otherwise indicated herein or clearly contradicted by context. Thus, "a" and "an" and "the" may mean at least one, or one or more.

The term "and/or" as used herein means each individual alternative as well as the combined alternatives, for instance, "a first and/or second barrier" is intended to mean one barrier alone, the other barrier alone, or both the first and the second barrier at the same time.

The use of any and all examples, or exemplary language (e.g., "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

Throughout the description when "selected from" or "selected from the group consisting of' is used it also means all possible combinations of the stated terms, as well as each individual term.

The citation and incorporation of patent documents herein is done for convenience only and does not reflect any view of the validity, patentability and/or enforceability of such patent documents.

The description herein of any aspect or embodiment of the invention using terms such as "comprising", "having", "including" or "containing" with reference to an element or elements is intended to provide support for a similar aspect or embodiment of the invention that "consists of', "consists essentially of', or "substantially comprises" that particular element or elements, unless otherwise stated or clearly contradicted by context (*e.g.,* a composition described herein as comprising a particular element should be understood as also describing a composition consisting of that element, unless otherwise stated or clearly contradicted by context).

This invention includes all modifications and equivalents of the subject matter re-cited in the aspects or claims presented herein to the maximum extent permitted by applicable law.

The features disclosed in the foregoing description may, both separately and in any combination thereof, be material for realizing the invention in diverse forms thereof.

### EXPERIMENTS

### Example: A composite filter that targets specific pollution compositions

Broadly defined the active particles can be attached to the substrate either physically or chemically. A physical attachment could be to trap the active particles in between two thin layers of felt or papers or within a compact pile of strings or when a fiber thread is twisted or heat sealed in small pockets in between two nylon meshes or heat sealed in small pockets in between a nylon mesh and a particle composite filter. One chemical attachment could be affected by adding an adhesive layer that attach the active particles to the surface of the substrate.

More specifically, a foam based composite filter as shown in Figure 1 could be prepared in a similar way as described by Oehler et al., in U.S. Pat. No. 5,820,927 or through the following description. The foam substrate is coated with a glue layer that ensures a firm attachment of the active particles. The adhesive glue layer could preferable be made from a hot-melt adhesive, but polystyrene, ABS, styrene or other adhesives would also work.

The synthesis of the composite filter includes steps of expanding the foam using a suitable solvent such as dichloromethane (DCM) and coating the substrate with glue, for example by dissolving hot-melt adhesive sticks in the DCM. The solvent could be prepared with 50 grams of ethylene vinyl acetate based adhesive, such as a 3M #3792 holt-melt glue stick, dissolved in 1 L of DCM. The solvent should be kept in a closed glass bottle with a lid, while stirred and heated until the glue sticks are dissolved. The solvent temperature should not exceed 35 °C. The solvent causes the foam to expand by for example a factor of two.

The foam is then placed in the solvent and allowed to expand. The foam expansion increases the pore size in the foam which increases the foam surface area and hereby increasing the activated carbon particle coverage. After about 10 seconds, the foam is removed and shaken to prevent any pores from being blocked with glue. The foam shrinks after soaking in solvent. This acts to give the optimum binding between the substrate and activated carbon particles. The foam is then placed on a metal rack and dried. The optimal glue layer thickness is obtained when the foam is coated multiple times 2-10 times, optimally 5 times. When the substrate is placed in the solvent it is important that the foam only stays in the solvent long enough for the whole foam to come in contact with the solvent but not so long that the solvent dissolves the already established glue layer. After the final coating the foam is placed on a metal rack and carbon particles are poured over the "wet" foam. The foam is then flipped, and the carbon particles are poured on the other side.

The working time to introduce the carbon is around ½-1 min. The activated carbon particles can either be activated carbon spheres, activated carbon beads, activated granular carbon particles or a mixture hereof. The activated carbon particles have a high surface area of around 1000-1700 m²/g dominated by pores smaller than 1 nm. The foam is now denoted composite filter.

The composite filter is dried for 20-30 min while sitting on a vibrating table that ensures maximum packing and removes any excess carbon particle stuck in the composite filter. The vibrating table vibrates at a frequency of 400 Hz with a power of 60 W. Once the carbon particles are stuck to the surface the composite filter is put into an oven for 10 to 25 min, optimally 15 min at temperatures of 115-135 °C, optimally at 123 °C. The viscosity of the glue layer is lowered at this temperature allowing the carbon particles to penetrate into the glue layer. The right temperature is very important as too high temperatures make the glue layer too viscous and decomposes the substrate, while too low temperatures keeps the glue layer too hard for the activated carbon particles to penetrate correctly. Right after heating, the composite filter is placed on the vibrating table for 10 min or until the composite filter is cold. The reduced viscosity of the glue combined with the vibrations from the table makes the carbon particles bond more tightly with the glue layer allowing the glue to infiltrate the surface pores of the activated carbon particles and thereby trapping the activated carbon particles firmly to the substrate.

The flexible knitted fabric, the bundle of meshes, the air permeable three-dimensional rigid framework (e.g. metal wires or monofilaments) and the brush like composite filter can all be used as a support structure for the composite filter media in a similar way as described for the foam support.

To target formaldehyde the active particle could be a catalyst (like doped gold nanoclusters 1 wt% on a Cerium (IV) oxide (CeO₂) particle, 1 wt% Pt/TiO₂ particle, 0.1 wt% Pt/Fe₂O₃ particle, 3 wt% Pt/MnOx-CeO₂ particle) or an acid activated carbon particle with impregnation such as potassium permanganate, 4-aminobenzoic acid (PABA), or hexamethylene diamine (HMDA), a photocatalyst particle like titanium dioxide (TiO₂) or a metal organic framework particle like Aluminium Fumarate, HKUST-1 (copper benzene-1,3,5-tricarboxylate), FeBTC (iron 1,3,5-benzenetricarboxylate), ZIF-8 (2-methylimidazole zinc salt) or Ni-MOF-74 is needed. To target NOx the active particle could be a potassium containing alkaline activated carbon particle with an impregnation such as potassium nitrate (KNO₃), potassium hydroxide (KOH), potassium carbonate (K₂CO₃) or potassium sulfate (K₂SO₄). To target VOCs the active particle could be an activated carbon particle that has a high available surface area/capacity to adsorb a high number of molecules, this could be an activated carbon particle without impregnation. To target acidic gases like hydrogen sulfide, sulfur dioxide, nitric acid, sulfuric acid, nitrous acid, hydrochloric acid, formic acid, acetic acid a basic treated active particle is need. Whereas basic gases like ammonia, amines, proton acceptors/electron donors will be more effective removed by an acidic particle. The active particle that targets sulfur dioxide and hydrogen sulfide could be an activated carbon particle with a basic impregnation such as potassium hydroxide (KOH) or sodium hydroxide (NaOH) or another similar base. To target ammonia the active particle could be an activated carbon particle modified to have a large amount of oxygen surface groups like Bronsted acid (like carboxylic acid groups) or Lewis acid sites on the surface layer. This active particle could be an acid impregnated activated carbon particle like a nitric acid (HNO₃) treated, sulfuric acid (H₂SO₄) treated or similar acid treated activated carbon particle.

To remove a high concentration of formaldehyde, NOx and VOCs a composite filter needs at least three different active particles.
1) One composite filter example that targets the removal of formaldehyde, NOx and VOCs could have a ratio between the three different active particles as follows: 1-35 wt% gold nanoclusters on cerium(IV)oxide, 40-95 wt% potassium hydroxide (alkaline/basic) impregnated activated carbon and 1-30 wt% activated carbon particles.
2) Another composite filter example that targets the same air pollution could have a ratio between the three active particles as follows: 1-30 wt% potassium permanganate impregnated activated carbon, 40-95 wt% potassium hydroxide (alkaline/basic) impregnated activated carbon and 1-30 wt% activated carbon particles.

All wt% are weight % of the active particle. Sulfur species like hydrogen sulfide and sulfur dioxide are very reactive towards metal centers and is therefore known to poison catalysts. One way to overcome this is to make a composite filter with a differentiated active particle ratio or one particle ratio on the first half and another on the other half or composite filter in which the fraction of a given particle type varies with depth from the front to the back faces of the composite filter. The upstream particle ratio could then have a large amount of an active particle that targets sulfur compounds. These would remove sulfur compounds and thereby protect the catalyst from being poisoned. The downstream side of the composite filter could then have an active particle concentration with an increased fraction of catalyst particles.
3) A composite filter example that would overcome the problem of catalyst poisoning could have the following ratios on the upstream side of the composite filter: 45-95 wt% potassium hydroxide (alkaline/basic) impregnated activated carbon, 5-40% acidic active particle and 5-30 wt% activated carbon particles. The downstream side of the composite filter could then have the following ratios: 5-60 wt% gold nanoclusters on cerium(IV)oxide, 20-60 wt% potassium hydroxide (alkaline/basic) impregnated activated carbon, 1-20 wt% acidic active particle and 1-20 wt% activated carbon particles.
Another composite filter example is a composite filter designed to remove ammonia.
4) A composite filter example which targets NOx, formaldehyde, VOCs and ammonia could have the following active particle ratios: 1-30 wt% gold nanoclusters on cerium(IV)oxide, 40-95 wt% potassium hydroxide (alkaline/basic) impregnated activated carbon, 1-30 wt% activated carbon and 1-15 wt% nitric acid or sulfuric acid impregnated activated carbon.

## Claims

1. A composite filter for removing multiple target molecules from a gas stream, comprising a three-dimensional porous support permeable to the gas stream and a first plurality of active particles for removing a first target molecule and a second plurality of active particles for removing a second target molecule, wherein the first plurality of active particles are different from the second plurality of active particle, and wherein the first and second plurality of active particles are immobilized in or by the support.

2. The composite filter of claim 1 wherein the gas is ambient air and the target molecules are pollutants comprised in the ambient air.

3. The composite filter of claim 1 wherein the first and/or second plurality of active particles are doped to provide chemical properties targeting a certain segment of pollution.

4. The composite filter of claim 2 or 3 wherein the pollutants are selected from at least one of volatile organic compounds, urban pollutants, naturally occurring compounds, emissions from traffic, indoor sources, industrial sites, construction sites, natural sources, occupational air pollution loads that include hazardous and non-hazardous concentrations of pollution.

5. The composite filter of claim 4 wherein the pollutants are selected from at least one of ozone, nitrogen oxides, sulphur oxides, formaldehyde, carbon monoxide, ammonia and hydrogen sulfide.

6. The composite filter of any one of the previous claims wherein the porous support comprises a third plurality of active particles for removing a third target molecule, wherein the third plurality of active particles are different from the first and second plurality of active particle, and wherein the third plurality of active particles are immobilized in or by the solid support.

7. The composite filter of any one of the previous claims wherein the porous support body comprises a further plurality of active particles for removing a further target molecule, wherein the further plurality of active particles is different from the first, second and third plurality of active particles, and wherein the further plurality of active particles is immobilized in or by the solid support.

8. The composite filter of any one of the previous claims wherein the first, second, optionally third and optionally further plurality of active particles are each independently selected from the group consisting of activated carbon particles, activated carbon particles pre-treated/impregnated with a metal, activated carbon particles pre-treated/impregnated with an enzyme, activated carbon particles pre-treated/impregnated with a basic compound, activated carbon particles pre-treated/impregnated with an acidic compound, metal organic framework (MOF) particle, catalyst particle, 1 wt% on a Cerium (IV) oxide (CeO₂) particle, 1 wt% Pt/TiO₂ particle, 0.1 wt% Pt/Fe₂O₃ particle, 3 wt% Pt/MnOx-CeO₂ particle, photocatalytic particles; provided that the first, second, optionally third and optionally further plurality of active particles are selected from different active particles.

9. The composite filter of any one of the previous claims wherein the three-dimensional porous support is selected from the group consisting of (i) a foam support body having a reticulated pore structure (ii) a felt of chemical- or bio-polymer fibers, (iii) twisted fiber thread, (iv) a flexible knitted fabric, (v) a bundle of mesh, (vi) a pile of strings, (vii) a pleated paper substrate, (viii) an air permeable three-dimensional rigid framework (e.g. metal wires or monofilaments), (viii) a brush like filter and, (ix) a material designed to give minimum flow resistance and maximum accessibility of the reaction surface to the gas stream.

10. The composite filter of any one of the previous claims wherein the pore size 25 or more precise from 5 to 20 PPI.

11. The composite filter of any one of the previous claims wherein the first, second, optionally third and optionally further plurality of active particles have a total surface area of from 100 to 7000 m²/g.

12. The composite filter of claim 11 wherein the first, second, optionally third and optionally further plurality of active particles have a total surface area from 800 to 2000 m²/g.

13. The composite filter of any one of the previous claims wherein the first, second, optionally third and optionally further plurality of active particles are fixed to the pore structure of the support by an adhesive forming an adhesive layer.

14. The composite filter of any one of the previous claims wherein the activated carbon particles are selected from activated carbon spheres, activated carbon beads, and/or activated carbon granules.

15. The composite filter of any one of the previous claims wherein the first, second, optionally third and optionally further plurality of active particles having an average particle diameter in the range from 0.005 to 3.0 mm.

16. The composite filter of any one of the previous claims wherein the first, second, optionally third and optionally further plurality of active particles are independently selected from activated carbon particles pretreated with lithium permanganate, calcium acetate, copper dioxide, potassium hydroxide, potassium permanganate, manganese dioxide, copper nitrate, manganese acetate, potassium carbonate, or sodium permanganate.

17. The composite filter of any one of the previous claims wherein the foam is a polyurethane based foam.

18. The composite filter of any one of the previous claims wherein the adhesive layer has a thickness obtainable by coating the foam at least two times with the adhesive.

19. The composite filter of any one of the previous claims wherein the adhesive is selected from a hot-melt adhesive, or an adhesive based on polystyrene, urethane, liquid resin, polyurethane, and/or styrene.

20. The composite filter of any one of the previous claims which, when air or gas is transported through the composite filter to remove pollution from the air or gas, exhibits a low pressure drop and a specific space velocity, wherein the pressure drop is below 20 Pa and the space velocity is from 5.000 h⁻¹ to 180.000 h⁻¹.

21. Use of a composite filter of any one of claims 1-20 in an air cleaning device.

22. Use of a composite filter of any one of claims 1-20 in an air conditioning device.

23. An air cleaning device comprising the composite filter of any one of claims 1-20.

24. A motorized vehicle comprising an air conditioning device, an air cleaning device or both an air cleaning and air conditioning device wherein any one of the devices comprises a composite filter of any one of claims 1-20.

25. A method of removing pollution molecules from ambient air comprising transporting the ambient air through a composite filter of any one of claims 1-20.
